# EUROPEAN PATENT APPLICATION

(11) **EP 4 840 737 A1**
(43) Date of publication of application: **18.11.2026**
(21) Application number: 25175879.3
(22) Date of filing: 12.05.2025
(51) Int. Cl.: B62J 29/00

(54) **HIGHLY ADJUSTABLE SIDE-VIEW MIRROR APPARATUS**

(71) Applicant: Li, Tung-Lieh, Taichung City (TW)
(72) Inventor: Li, Tung-Lieh, Taichung City (TW)
(74) Representative: Lang, Christian

(57) **Abstract**

A side-view mirror apparatus includes a shell, a strut, a threaded rod and a nut. The strut includes a slot. The threaded rod includes a first section fitted in the shell and a second section extending through the slot from the shell so that the second section of the threaded rod is rotatable in and translatable along the slot. The nut is engaged with the second section of the threaded rod.

## Description

### BACKGROUND OF INVENTION

### 1. FIELD OF INVENTION

The present invention relates to a side-view mirror apparatus and, more particularly, to a highly adjustable side-view mirror apparatus.

### 2. RELATED PRIOR ART

A bicycle is sometimes equipped with two side-view mirror apparatus. Each of the side-view mirror apparatuses reflects an area behind the bicycle on a side for safety on the road.

A conventional side-view mirror apparatus includes a mirror, a ball formed on a rear face of the mirror, a socket for receiving a portion of the ball, a rod for supporting the socket. The rod is attached to a handlebar of a bicycle. The ball is allowed to rotate relative to the socket to adjust the angle of the side-view mirror apparatus. However, the rod is not adjustable so that the elevation of the side-view mirror apparatus relative to the bicycle is not adjustable.

The present invention is therefore intended to obviate or at least alleviate the problems encountered in the prior art.

### SUMMARY OF INVENTION

It is the primary objective of the present invention to provide a highly adjustable side-view mirror apparatus.

To achieve the foregoing objectives, the side-view mirror apparatus includes a shell, a strut, a threaded rod and a nut. The strut includes a slot. The threaded rod includes a first section fitted in the shell and a second section extending through the slot from the shell so that the second section of the threaded rod is rotatable in and translatable along the slot. The nut is engaged with the second section of the threaded rod.

Other objectives, advantages and features of the present invention will be apparent from the following description referring to the attached drawings.

### BRIEF DESCRIPTION OF DRAWINGS

The present invention will be described via detailed illustration of the preferred embodiment referring to the drawings wherein:
FIG. 1 is an exploded view of a side-view mirror apparatus according to the preferred embodiment of the present invention;
FIG. 2 is a perspective view of the side-view mirror apparatus shown in FIG. 1;
FIG. 3 is a cross-sectional view of the side-view mirror apparatus shown in FIG. 1;
FIG. 4 is a rear view of the side-view mirror apparatus shown in FIG. 2; and
FIG. 5 is a rear view of the side-view mirror apparatus in another position than shown in FIG. 4.

### DETAILED DESCRIPTION OF PREFERRED EMBODIMENT

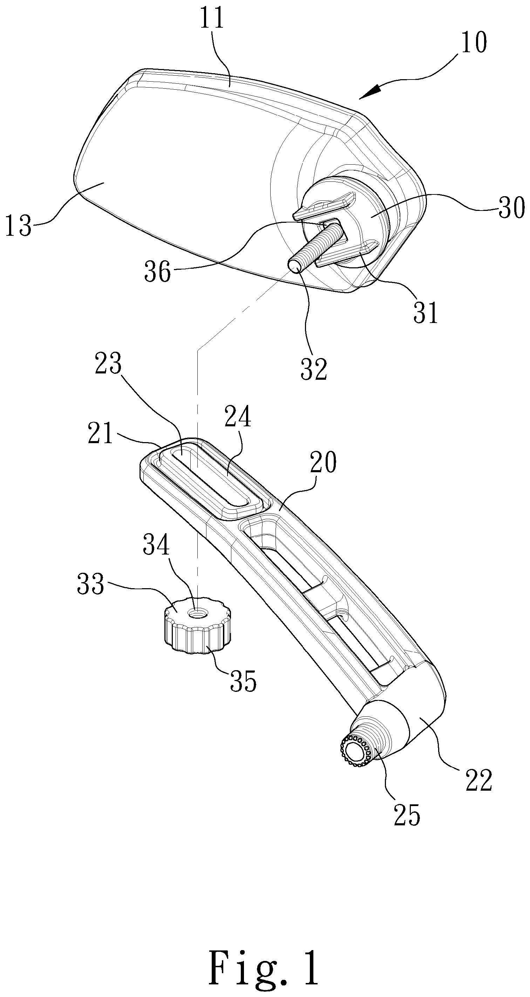

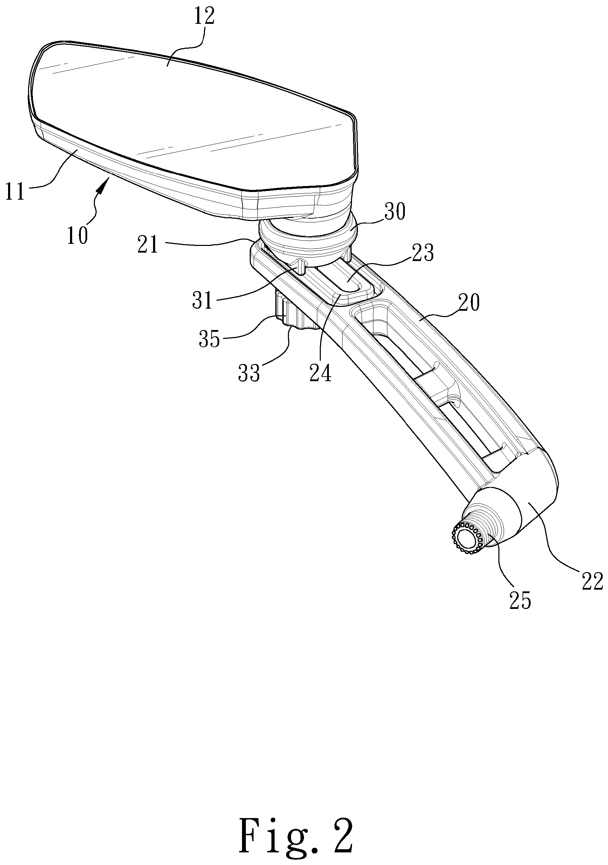

Referring to FIGS. 1 and 2, a side-view mirror apparatus includes a shell 11, a mirror 12 inserted in shell 11, a strut 20, a sled 30 for movably carrying shell 11 on strut 20, a threaded rod 32 extending through sled 30 and strut 20 from shell 11, and a nut 33 engaged with threaded rod 32 to keep sled 30 and shell 11 on strut 20 according to the preferred embodiment of the present invention.

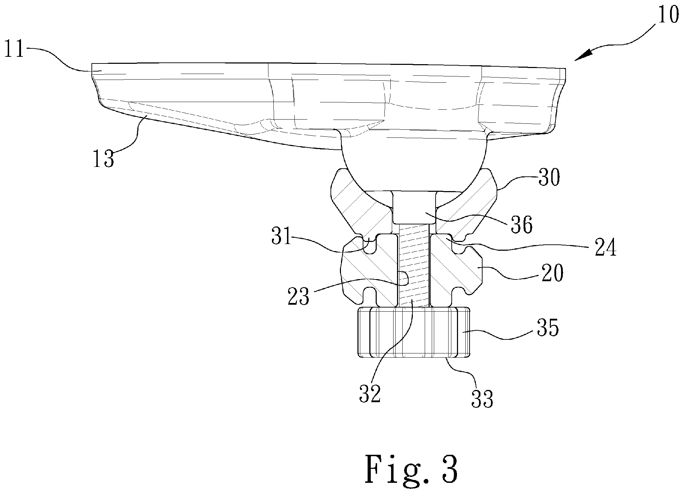

Referring to FIG. 3, strut 20 includes two ends 21 and 22 and two protuberances 24 respectively formed on front and rear faces. Protuberances 24 are located closer to end 21 than end 22. A slot 23 is made in strut 20. Each protuberance 24 extends around slot 23. A connective portion 25 extends from end 22 of strut 20. Preferably, connective portion 25 is a threaded rod. In another embodiment, connective portion 25 can be a conical protuberance as disclosed in Taiwanese Patent No. M485844.

Shell 11 includes an opening (not numbered) in a face, a semi-spherical portion (not numbered) on an opposite face, and a tubular portion 36 extending from the semi-spherical portion. Mirror 12 is inserted in the opening of shell 11. Threaded rod 32 includes a section fitted in tubular portion 36 and another section extending from tubular portion 36.

Sled 30 is a socket for receiving the semi-spherical portion of shell 11, thereby allowing them to rotate relative to each other. Sled 30 includes an aperture (not numbered) for receiving tubular portion 36.

Nut 33 includes a screw hole 34 in a center and a skid-proof portion 35 on a periphery. Skid-proof portion 35 facilitate a user to maneuver nut 33.

Threaded rod 32 is engaged with nut 33 after extending through slot 23 and the aperture of sled 30. Thus, strut 20 is located between sled 30 and nut 33. Nut 33 is in contact with a protuberance 24 and sled 30 is located between another protuberance 24 and the semi-spherical portion of shell 11. Thus, side-view mirror apparatus 10 is kept in position.

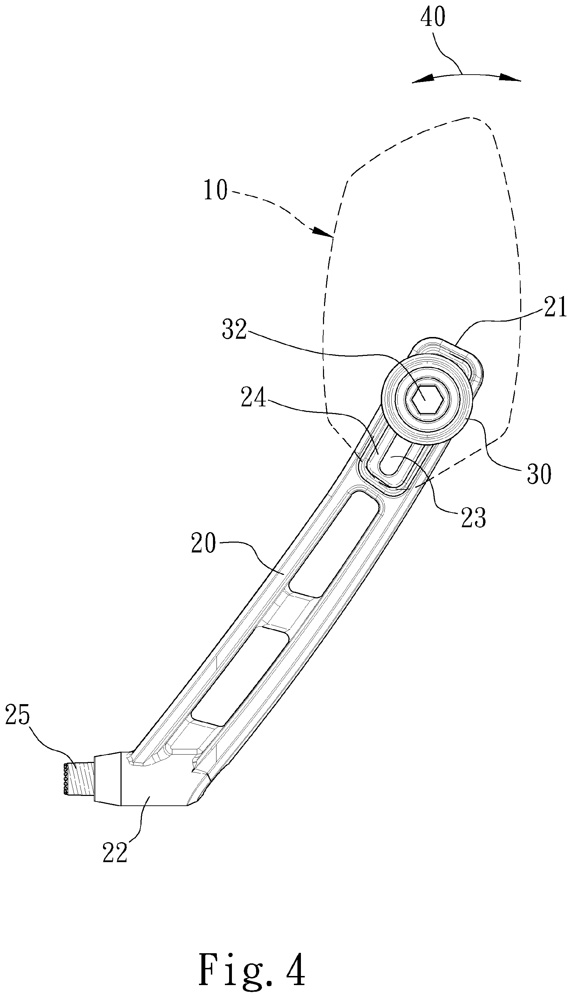

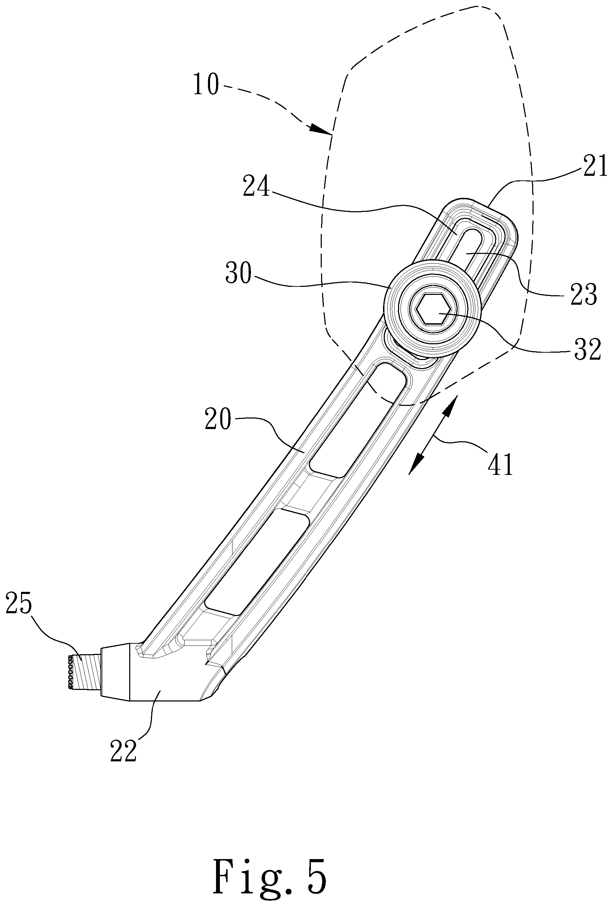

Nut 33 can be slackened relative to threaded rod 32 to allow sled 30 and nut 33 to move relative to protuberances 24 of strut 20. Referring to FIG. 4, shell 11 is rotatable relative to strut 20 as indicated by a double-headed arrow 40. Referring to FIG. 5, shell 11 is translatable relative to strut 20 as indicated by a double-headed arrow 41. Thus, side-view mirror apparatus 10 is highly adjustable. Nut 33 is engaged with threaded rod 32 again after shell 11 and mirror 12 are in a desired angle and location relative to strut 20.

Preferably, sled 30 is formed with two fins 31. A protuberance 24 is located between fins 31 when threaded rod 32 is inserted in slot 23. Fins 31 prevent sled 30 from rotation relative to corresponding protuberance 24, thereby rendering smooth translation of sled 30 and shell 11 relative to strut 20.

The present invention has been described via the illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A side-view mirror apparatus comprising:
a shell (11);
a strut (20) comprising a slot (23);
a threaded rod (32) comprising a first section fitted in the shell (11) and a second section extending through the slot (23) from the shell (11) so that the second section of the threaded rod (32) is rotatable in and translatable along the slot (23); and
a nut (33) engaged with the second section of the threaded rod (32).

2. The side-view mirror apparatus according to claim 1, comprising a sled (30) for receiving a portion of the shell (11) when the threaded rod (32) extends through the sled (30) the strut (20), wherein the sled (30) is located between the strut (20) and the shell (11), wherein the strut (20) is located between the sled (30) and the nut (33).

3. The side-view mirror apparatus according to claim 2, wherein the strut (20) comprises a slot (23) and two protuberances (24) on two opposite faces, wherein each of the protuberances (24) extends around the slot (23), wherein the protuberances (24) are respectively in contact with the sled (30) and the nut (33).

4. The side-view mirror apparatus according to claim 3, wherein the sled (30) comprises two fins (31) extending from a face, wherein one of the protuberances (24) is located between the fins (31).
